# EUROPÄISCHE PATENTSCHRIFT

(11) **EP 1 526 998 B1**
(45) Veröffentlichungstag und Bekanntmachung des Hinweises auf die Patenterteilung: **17.09.2008**
(21) Anmeldenummer: 03729792.6
(22) Anmeldetag: 03.07.2003
(51) Int. Cl.: B62H 1/12

(54) **EINRICHTUNG ZUM STABILISIEREN EINES EINSPURFAHRZEUGS UND EINSPURFAHRZEUG MIT EINER DERARTIGEN EINRICHTUNG**
DEVICE FOR STABILIZING A SINGLE-TRACK VEHICLE AND SINGLE-TRACK VEHICLE COMPRISING SUCH A DEVICE
SYSTEME POUR STABILISER UN VEHICULE A VOIE UNIQUE ET VEHICULE A VOIE UNIQUE EQUIPE D'UN TEL SYSTEME

(30) Priorität: 09.08.2002 CH 138302
(43) Veröffentlichungstag der Anmeldung: 04.05.2005
(73) Patentinhaber: PERAVES AKTIENGESELLSCHAFT, CH-8406 Winterthur (CH)
(72) Erfinder: WAGNER, Arnold, CH-8406 Winterthur (CH)
(74) Vertreter: EGLI-EUROPEAN PATENT ATTORNEYS
(86) Internationale Anmeldenummer: PCT/CH2003/000439
(87) Internationale Veröffentlichungsnummer: WO 2004/014716

(56) Entgegenhaltungen:
- EP-A- 0 097 623
- WO-A-00/34112
- US-A- 5 048 864
- US-A- 5 401 055
- US-B1- 6 170 847
- PATENT ABSTRACTS OF JAPAN vol. 2000, no. 26, 1. Juli 2002 (2002-07-01) -& JP 2001 253376 A (KAYABA IND CO LTD), 18. September 2001 (2001-09-18)

## Beschreibung

Die Erfindung betrifft eine Einrichtung zum Stabilisieren eines Einspurfahrzeuges gemäss dem Oberbegriff des Anspruches 1 sowie ein mit einer derartigen Einrichtung versehenes Einspurfahrzeug.

Einspurfahrzeuge, beispielsweise Motor- oder Fahrräder, sind bei genügender Fahrgeschwindigkeit eigenstabil, müssen jedoch beim Anhalten durch die Füsse des Fahrers oder mittels einer Stützvorrichtung, etwa mit Kufen oder Stützrollen, abgestützt werden, um ein Umkippen zu vermeiden. An vollverkleideten Zweirädern, die wegen der Karossierung eine Fussabstützung nicht ermöglichen, sind Stützvorrichtungen mit seitlichen Stützrollen bekannt, welche bei höheren Geschwindigkeiten angehoben werden, damit einspurige Kurvenneigung für Schnellfahrt möglich wird. Ähnliche Vorrichtungen werden auch an unverkleideten Einspurfahrzeugen für Behinderte, Kleinwüchsige und für Lern- und Versuchsfahrten verwendet. Es ist auch der Vorschlag bekannt, die Anhebung der Stützvorrichtung für die Schnellfahrt bzw. die Absenkung für die Stabilisierung beim Anhalten mit dem Fahrtmesser-Signal zu koppeln und bei jeweils einer bestimmten Geschwindigkeit die entsprechende Betätigung selbsttätig zu veranlassen oder zumindest den Fahrer durch ein Warnsignal zur Betätigung aufzufordern. In der Praxis hat sich diese einfache Koppelung an das Fahrtsignal nicht durchgesetzt. Besteht nämlich, etwa bei Kurvenfahrt oder bei seitlich geneigter Fahrbahn, eine einseitige Belastung der Stützvorichtung so kann das Fahrzeug beim Hochziehen der Stützvorrichtung trotz genügender Geschwindigkeit zur Seite kippen.

Aus der EP 0 097 623 B1 ist Einrichtung der eingangs genannten Art bekannt, welche zusätzlich zum Fahrtmesser einen Querbeschleunigungsmesser enthält, der ein Hochziehen bei einseitiger Belastung verhindern bzw. ein Absenken trotz genügender Fahrgeschwindigkeit bei ansteigender Querbeschleunigung, Anzeichen bevorstehenden Kippens, bewirken soll. Die Verwendung des Fahrtmessersignals unter Berücksichtigung der Querbeschleunigung als Parameter für die Anhebung bzw. Absenkung der Stützvorrichtung hat sich im Fahrbetrieb von Kabinenmotorrädern als geeignete und sichere Methode erwiesen, dem Fahrer die Betätigungsmöglichkeit anzuzeigen. Als nachteilig kann jedoch eine relativ schwierige Angewöhnung des Fahrers an das unterschiedliche Lenkverhalten des Fahrzeugs angesehen werden, wenn er auf diese Anzeige hin die Stützvorrichtung hochzieht. Mit abgesenkten Stützrollen, d.h. bei mehrspurigem Fahrzeugbetrieb, bewirkt nämlich eine Drehung der Lenkvorrichtung im Uhrzeigersinn eine Rechtskurve. Bei angehobenen Stützrollen im Einspurbetrieb bewirkt die gleiche Betätigung der Lenkvorrichtung eine Fahrzeugneigung nach links und in der Folge eine Linkskurve. Eine automatische Betätigung der Stützvorrichtung ist damit praktisch ausgeschlossen, weil der Fahrer von dieser Änderung des Lenkverhaltens überrascht werden kann und somit die Gefahr einer Betätigung der Lenkvorrichtung in der falschen Richtung besteht. Diese bekannte Ausführung eignet sich somit insbesondere für Anwendungen in fail-passiven Systemen, die falsche Betätigungen der Stützvorrichtung verhindern, indem z.B. die vom Fahrer ausgelöste Anhebung erst bei genügender Fahrgeschwindigkeit und ohne Querbeschleunigung ermöglicht und die wiederum vom Fahrer auszulösende Absenkung nur bei entsprechenden Bedingungen erlaubt wird. Dadurch ergeben sich jedoch gegenüber herkömmlichen Einspurfahrzeugen mit Fussabstützung geänderte Bedienungsanforderungen, und eine beachtliche Umlemphase wird unvermeidbar.

Aus US 5401055 ist ebenfalls eine Einrichtung zum Stabilisieren eines Einspurfahrzeuges der eingangs genannten Art bekannt. Das Einspurfahrzeug weist zur Stabilisierung auf beiden Seiten jeweils ein Stützrad auf, das in Abhängigkeit von dem Steuersignal eines Fahrtmessers oder eines Sensors ausgefahren und auf den Boden abgesenkt oder angehoben und vom Boden wieder entfernt werden kann. Um die Stützräder absenken bzw. anheben zu können, sind für jedes der Stützräder jeweils ein vertikal angeordneter Zylinder mit einem pneumatisch bewegbaren Kolben und ein horizontal angeordneter Zylinder mit einem pneumatisch bewegbaren Kolben vorgesehen. Um den jeweiligen Kolben zu bewegen, wird Druckluft aus einem Tank, der mittels eins Kompressors mit komprimierter Luft versorgt wird, jeweils gesteuert von Ventilen in den jeweiligen Zylinder wahlweise auf der einen oder der anderen Seite des Kolben eingelassen, wobei die auf der jeweils anderen Seite des Kolbens vorhandene Luft aus dem Zylinder über ein gesteuertes Entlüftungsventil an die Umgebung abgegeben werden kann. Weiterhin ist für jedes Stützrad ein Hydraulik-Zylinder mit einem hydraulisch betätigbaren Kolben vorgesehen, mit dessen Hilfe das Stützrad, wenn es vollständig ausgefahren ist, blockiert werden kann, um eine vertikale Bewegung des Stützrades zu verhindern, beispielsweise beim Parken des Fahrzeugs. Zur Stabilisierung des Fahrzeugs werden demnach eine Vielzahl von Steuerventilen benötigt.

Der Erfindung liegt die Aufgabe zugrunde, eine insbesondere in dieser Hinsicht verbesserte, weiter entwickelte Einrichtung der eingangs genannten Art zu schaffen, bei der die vorstehend genannten Nachteile nicht auftreten.

Diese Aufgabe wird durch die im kennzeichnenden Teil des Patentanspruchs 1 angegebene Erfindung gelöst.

Die Vorteile der Erfindung sind im Wesentlichen darin zu sehen, dass auf einfache Weise eine funktionssichere Stabilisierungseinrichtung erzielbar ist, bei der die gewöhnungsbedürftige Änderung des Lenkverhaltens in den langsamen Randbereich des Fahrbetriebs verschoben und damit eine richtungsfalsche Lenkerbetätigung vermieden und die Kippsicherheit des Fahrzeuges entsprechend verbessert wird. Die erfindungsgemäss ausgeführte Einrichtung erfordert keine besondere Umlemphase für Zweiradfahrer, ermöglicht eine selbsttätige Betätigung der Stützvorrichtung ohne zusätzliche Bedienungsanforderungen und gestattet zusätzlich eine sichere Einführung in die Zweiradfahrtechnik für Ungeübte.

In den abhängigen Ansprüchen sind Ausgestaltungen der Erfindung angegeben.

Die Erfindung wird anhand eines in der Zeichnung schematisch dargestellten Ausführungsbeispiels erläutert. Es zeigen:
- Fig.1: ein mit einer erfindungsgemässen Einrichtung versehenes Einspurfahrzeug in einer Seitenansicht,
- Fig.2: eine erfindungsgemässe Einrichtung zum Stabilisieren des Einspurfahrzeuges in einer Queransicht von hinten,
- Fig.3: die Einrichtung nach Fig.2 in einer zweiten Betriebsstellung,
- Fig.4: die Einrichtung,nach Fig.2 in einer dritten Betriebsstellung, und
- Fig.5: eine Längsschnittansicht einer Einzelheit der Einrichtung nach Fig.2 in einer grösseren Darstellung.

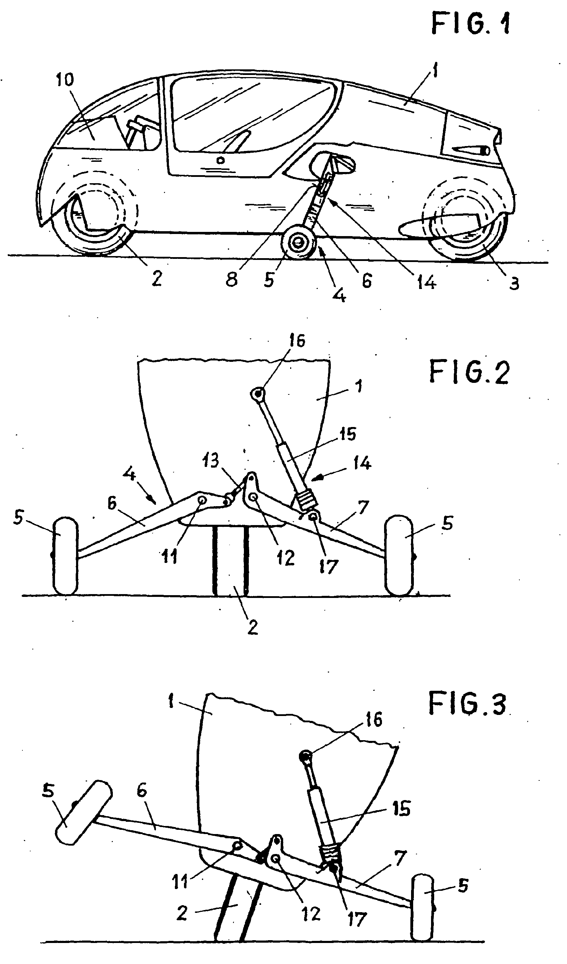

Das Einspurfahrzeug nach Fig.1, darstellungsgemäss ein Kabinen-Motorrad, weist eine Karosserie 1, ein Vorderrad 2, ein Hinterrad 3 und eine Stabilisiereinrichtung auf, welche eine Stützvorrichtung 4 mit Stützrollen 5 enthält. Die Stützrollen 5 sind je auf einer aus- und einschwenkbaren Stützachse 6 bzw. 7 gelagert. Die Stützachsen 6 und 7 sind durch in der Karosserie 1 vorgesehene Schlitze 8 herausgeführt, in denen sie je zwischen einer dargestellten abgesenkten Stützstellung und einer angehobenen Ruhestellung verstellbar sind. Die Stützvorrichtung 4 ist über ein im Fahrzeug vorgesehenes Steuergerät 10 betätigbar, welches in Abhängigkeit von Steuersignalen eines die Geschwindigkeit des Fahrzeuges erfassenden, nicht dargestellten Fahrtmessers und von Steuersignalen eines nicht dargestellten Querbeschleunigungsmessers beeinflussbar ist.

Wie aus den Figuren 2 bis 4 hervorgeht, sind die Stützachsen 6 und 7 mit ihren einander zugewandten Enden an zwei Lagerstellen 11 und 12 am Fahrzeug schwenkbar angelenkt und über ein mit einer Dämpfungseinrichtung versehenes Federelement 13 miteinander synchron verstellbar gekoppelt. Die Stützvorrichtung 4 ist über eine Verstellvorrichtung 14 betätigbar, welche ein durch Steuersignale des Steuergerätes 10 und/oder des Fahrers kombinierbar beeinflussbares Stütz- und Betätigungselement 15 enthält, das am Fahrzeug und an der Stützachse 7 an Lagerstellen 16 bzw. 17 angelenkt ist. In der Fig.2 ist die Stützvorrichtung 4 mit dem vorgeschalteten Stütz- und Betätigungselement 15 auf noch zu beschreibendende Weise in einer ausschiebend straffen Einstellung mit seitlicher Abstützung etwa vertikal zur Strassenoberfläche dargestellt, welche Einstellung ein direktes Lenkverhalten eines mehrspurigen Fahrzeuges bewirkt.

Die Fig.3 zeigt die Stützvorrichtung 4 mit dem vorgeschalteten Stütz- und Betätigungselement 15 in einer noch zu beschreibendenden, losen Einstellung, welche eine leicht gedämpfte Neigung des Fahrzeugs durch Gegenlenken wie bei einem ungestützten Einspurfahrzeug erlaubt.

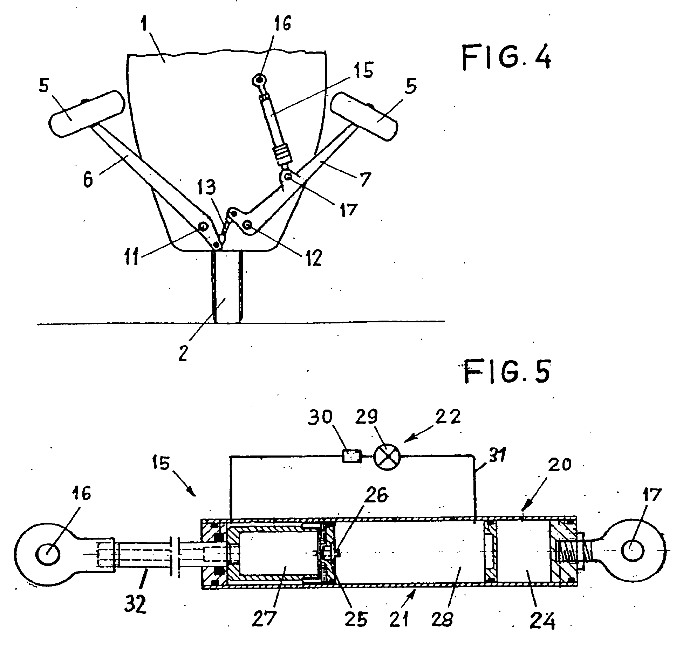

Die Fig.4 zeigt die Stützvorrichtung 4 mit dem vorgeschalteten Stütz- und Betätigungselement 15 in einer gespannten Einstellung, welche eine ungestützte Einspurfahrt mit Neigungsfreiheit gestattet.

Nach einer abgewandelten, nicht dargestellten Ausführungsform kann jeder der beiden Stützachsen 6 und 7 ein eigenes, kombinierbar beeinflussbares Stütz- und Betätigungselement 15 vorgeschaltet sein.

Die Fig.5 zeigt ein Ausführungsbeispiel des kombinierbar beeinflussbaren Stütz-und Betätigungselementes 15 mit einer gegen aussen geschlossenen Kolben-/Zylinderanordnung 20, die eine blockierbare Hydraulik-Gasfeder 21 mit einer Spannvorrichtung 22 enthält. Die Hydraulik-Gasfeder 21 umfasst einen Gasraum 24, einen davon getrennten Hydraulikflüssigkeitsraum 28 und einen in diesem geführten Kolben 25, der mit einem elektrisch oder durch andere Betätigungsmittel, darstellungsgemäss durch einen Elektromagneten 27, aktivierbaren, schliess- und öffnungsfähigen Durchströmventil 26 die Zustände STARR (geschlossen) bzw. LOSE (offen) durch hydraulische Verdrängungsübersetzung bewirkt.

Der Gasraum 24 ist zur Aufnahme eines Druckmediums zur Federung, zum Ausschieben der Stützachsen 6, 7, zur Speicherung der Ausschiebe-Energie im gespannten Zustand und zum Volumenausgleich bestimmt. Die Hydraulik-Gasfeder 21 kann durch eine aussenwirkende Kraft bei geöffnetem Durchströmventil 26 oder durch Umpumpen von Hydraulikflüssigkeit auf die andere Kolbenseite bei geschlossenem Durchströmventil 26 gespannt und in gespannter Lage hydraulisch oder mechanisch blockiert werden, wobei bei der Lösung dieser Blockierung die gespeicherte Energie zur Absenkung der Stabilisierungsvorrichtung in den Abstützungszustand angewendet wird. Die Spannvorrichtung 22 enthält eine Hydraulik-Pumpe 29 mit einem Steuerventil 30, welche zum Umpumpen der Hydraulikflüssigkeit beim Spannvorgang bestimmt ist und im Gegendrehsinn beim Ausschieben der Stützachsen unterstützend wirken kann.

Nach einer abgewandelten, nicht dargestellten, ebenfalls gegen aussen geschlossenen Ausführungsform kann der Gasraum 24 sowie das Durchströmventil 26 auch ausserhalb der Gasfeder 21, die damit auf einen doppelwirkenden Servozylinder reduziert wird, an/in die Verbindungsleitung 31 angeschlossen bzw. eingebaut werden, was eine Reduktion der Baulänge des Stütz- und Betätigungselements bei gleichzeitig grösserem Betätigungsweg erlaubt. Kennzeichnend ist ebenfalls bei dieser Ausführung, dass das Hydrauliksystem in sich geschlossen ist und der durch das Einfahren der Kolbenstange 32 des Betätigungselements ansteigende Innendruck als Energiespeicher zum Absenken der Stabilisierungsvorrichtung mit einer einfachen Öffnung des Ventils 30 aktiviert werden kann.

Das erfindungsgemäss vorgesehene, der Stützvorrichtung 4 vorzuschaltende, kombinierbare Stütz- und Betätigungselement 15 wird durch Fahrt- und Querbeschleunigungssignale und/oder durch den Fahrer beeinflusst, d.h. STRAFF oder LOSE, AUSSCHIEBEND, bzw. GESPANNT eingestellt und bewirkt dementsprechend eine sichere Abstützung im Stillstand sowie die Möglichkeit abgestützter und/oder geneigter Fahrt bei abgesenkter Position und eine selbsttätige Anhebung für Einspurfahrt bzw. Absenkung vor dem Anhalten. Durch die erfindungsgemäss verbesserte Stabilisierungseinrichtung sind nun folgende Betriebszustände möglich:
- STRAFF (Fig.2):
   Das straffe Stütz- und Betätigungselement 15, beispielsweise als blockierte Hydraulik-Gasfeder ausgebildet, bewirkt eine Abstützung des Fahrzeugs etwa senkrecht zur Strassenoberfläche und wird beim Parkieren, Manövrieren, Rückwärtsfahren, bei geringen Geschwindigkeiten und/oder auf rutschiger Strasse verwendet. Lenkausschläge wirken direkt, d.h. Lenkerdrehung links = Linkskurve, wie z.B. beim Gespann oder Dreirad. In diesem Zustand wird das Element 15 als Federung der Stabilisierungseinrichtung durch kleine Längenänderungen unter Lastschwankungen verwendet.
- LOSE (Fig.3):
   Beim Abfahren kann selbsttätig durch ein zunehmendes Fahrtmesser- und/oder vom Fahrer ausgelöstes Signal, jedoch nur bei seitlichem Gleichgewicht, d.h. bei geringer Querbeschleunigung, das ausschiebende Stütz- und Betätigungselement 15 gelöst werden, indem beim dargestellten Beispiel die Hydraulik-Gasfeder deblockiert wird, was bei abgesenkter Stützvorrichtung 4 und Vorwärtsfahrt einen einspurähnlichen Fahrzeugbetrieb mit Gegenlenken und Kurvenschräglagen erlaubt, wobei die Stützvorrichtung einseitig oder beidseitig der Strassenoberfläche folgt und bei Auftreten von Querbeschleunigung bzw. beim Anhalten ein sofortiges Umschalten auf STRAFF selbsttätig durch ein abnehmendes Fahrtmesser-und/oder ein zunehmendes Querbeschleunigungssignal oder, ausgelöst durch ein Fahrersignal, möglich ist, sodass ein Umkippen verhindert wird. Zusätzlich kann eine entstandene Fahrzeugschräglage durch die gegen die Spannrichtung aktivierte, AUSSCHIEBENDE Hydraulikpumpe aufgerichtet und im Extremfall sogar das auf der Seite liegende Fahrzeug derart wieder hochgehoben werden.
- GESPANNT (Fig.4):
   Aus dem Betriebszustand LOSE kann die Stützvorrichtung 4 jederzeit durch Spannen des Stütz- und Betätigungselements 15 selbsttätig oder auf Fahrersignal hin hochgezogen werden, ohne dass sich das Lenkverhalten des Fahrzeugs verändert. Durch eine interne oder externe Spannvorrichtung 22 wird das kombinierbare Stütz- und Betätigungselement 15, darstellungsgemäss durch Umpumpen der Hydraulikflüssigkeit in der Hydraulik-Gasfeder 21 auf die Gegenseite des Kolbens, oder durch mechanisches Spannen von aussen in der Länge derart verändert, d.h. GESPANNT, dass die Stützvorrichtung 4 abgehoben und die Neigungsfreiheit des Fahrzeugs für den Einspurbetrieb gewährleistet wird.

Aus diesem Betriebszustand wird durch ein abnehmendes Fahrtmesser- und/oder Fahrersignal zuerst eine Sicherheitssperre gegen ungewolltes Absenken überwunden und dann das Stütz- und Betätigungselement 15 entweder selbsttätig oder manuell auf Fahrersignal hin gelöst und durch die nun freigesetzte, vorher beim Spannen angesammelte Energie schnell in den Zustand abgesenkt und LOSE (Fig.3) übergeführt, was wiederum keine Änderung des Lenkverhaltens bewirkt und somit auch keine Umstellung vom Fahrer verlangt . Bei weiterer Reduktion des Fahrtmessersignals, gegebenenfalls auch bei Aufkommen von Querbeschleunigung (= einem Anzeichen für beginnendes Umkippen) geht das Stütz- und Betätigungselement 15 selbsttätig oder auf Fahrersignal hin in den Zustand AUSSCHIEBEND und STRAFF (Fig.2) über, und ein sicheres Anhalten ohne Kippgefahr und/oder ein Aufrichten ist dadurch gewährleistet.

## Patentansprüche

1. Einrichtung zum Stabilisieren eines Einspurfahrzeuges, mit einer Stützvorrichtung (4) und einer zum wahlweisen Absenken und Anheben von Stützelementen bestimmten Verstellvorrichtung (14), welche über ein Steuergerät (10) betätigbar ist, das in Abhängigkeit von Steuersignalen eines die Geschwindigkeit des Fahrzeuges erfassenden Fahrtmessers und eines Querbeschleunigungsmessers beeinflussbar ist, wobei die Verstellvorrichtung (14) mindestens ein über das Steuergerät (10) und/oder durch Fahrersignale kombinierbar beeinflussbares, zum Ausschieben und zum Einziehen der Stützvorrichtung (4) bestimmtes und gegen diese verspannbares Stütz- und Betätigungselement (15) sowie Mittel zum wahlweisen Blockieren, Deblockieren, Spannen und Ausschieben des Stütz- und Betätigungselementes (15) enthält, **dadurch gekennzeichnet,**
**dass**
das Stütz- und Betätigungselement (15) eine gegen aussen geschlossene Hydraulik-Gasfeder (21) enthält, welche einen Gasraum (24) als Volumenausgleich und Energiespeicher, einen davon getrennten Hydraulikflüssigkeitsraum (28) und einen in diesem geführten, eine hydraulische Verdrängungsübersetzung bewirkenden Kolben (25) umfasst, wobei der Kolben (25) mit einem einzigen Um- oder Durch-Strömventil (26) für Hydraulikflüssigkeit versehen ist, welches abhängig von dem jeweiligen Steuersignal und/oder dem Fahrersignal geöffnet oder geschlossen werden kann,
und **dass** die Mittel zum wahlweisen Blockieren, Deblockieren, Spannen und Ausschieben des Stütz- und Betätigungselementes (15) eine einzige Hydraulik-Pumpe (29) umfassen, die zum Umpumpen von Hydraulikflüssigkeit von einer Seite des Kolbens (25) zur anderen Seite des Kolbens (25) bzw. umgekehrt bestimmt ist.

2. Einrichtung nach Anspruch 1, mit zwei seitlich aus- und einschwenkbaren Stützachsen (6 und 7) für je eine Stützrolle (5), **dadurch gekennzeichnet, dass** die Stützachsen (6 und 7)) miteinander synchron verstellbar gekoppelt sind und dass das Stütz- und Betätigungselement (15) mit einer dieser Stützachsen (6 bzw. 7) gekoppelt ist.

3. Einrichtung nach Anspruch 1, mit zwei seitlich aus- und einschwenkbaren Stützachsen (6 und 7) für je eine Stützrolle (5), **dadurch gekennzeichnet, dass** jede dieser Stützachsen (6 bzw. 7) mit einem eigenen Stütz- und Betätigungselement (15) gekoppelt ist.

4. Einrichtung nach einem der vorangehenden Ansprüche, **dadurch gekennzeichnet, dass** die Mittel zum wahlweisen Blockieren, Deblockieren, Spannen und Ausschieben des Stütz- und Betätigungselementes (15) ein Steuerventil (30) zum Steuern eines Flusses der Hydraulikflüssigkeit von einer Seite des Kolbens (25) zur anderen Seite des Kolbens (25) bzw. umgekehrt umfassen.

5. Einrichtung nach einem der vorangehenden Ansprüche, **dadurch gekennzeichnet, dass** zum Ansteuern und zum Verstellen des Stütz- und Betätigungselementes (15) in die Zustände STARR, LOSE, GESPANNT und AUSSCHIEBEND elektrische, pneumatische oder mechanische Mittel oder eine Kombination von zwei oder allen drei Mitteln vorgesehen sind.

6. Einspurfahrzeug mit einer Stabilisierungseinrichtung nach einem der Ansprüche 1 bis 5.

## Claims

1. Apparatus for stabilising a single-track vehicle, with a support device (4) and an adjustment device (14) which is intended for optionally lowering and raising support elements and which can be operated by means of a control unit (10) which can be influenced as a function of control signals from a speed meter which detects the speed of the vehicle and from a lateral acceleration meter, wherein the adjustment device (14) contains at least one supporting and operating element (15) which can be influenced by means of the control unit (10) and/or in a combinable manner by means of driver signals, intended for pushing out and drawing in the support device (4) and which can be braced against the latter, and means for optionally locking, unlocking, tensioning and pushing out the supporting and operating element (15), **characterised in that**
the supporting and operating element (15) contains a hydraulic gas spring (21) which is closed towards the outside and comprises a gas space (24) as volume compensation and energy store, a hydraulic fluid space (28) which is separated from the gas space and a piston (25) which is guided in the hydraulic fluid space and effects a hydraulic displacement translation, wherein the piston (25) is provided with a single circulation or throughflow valve (26) for hydraulic fluid, which can be opened or closed as a function of the respective control signal and/or the driver signal,
and that the means for optionally locking, unlocking, tensioning and pushing out the supporting and operating element (15) comprise a single hydraulic pump (29), which is intended for circulating hydraulic fluid from one side of the piston (25) to the other side of the piston (25) and vice versa.

2. Apparatus according to Claim 1, with two support axes (6 and 7), which can be laterally pivoted out and in, for in each case one support roller (5), **characterised in that** the support axes (6 and 7) are coupled to each other in a synchronously adjustable manner and that the supporting and operating element (15) is coupled to one of these support axes (6 or 7).

3. Apparatus according to Claim 1, with two support axes (6 and 7), which can be laterally pivoted out and in, for in each case one support roller (5), **characterised in that** each of these support axes (6 and 7) is coupled to its own supporting and operating element (15).

4. Apparatus according to one of the preceding claims, **characterised in that** the means for optionally locking, unlocking, tensioning and pushing out the supporting and operating element (15) comprise a control valve (30) for controlling a flow of the hydraulic fluid from one side of the piston (25) to the other side of the piston (25) and vice versa.

5. Apparatus according to one of the preceding claims, **characterised in that** electrical, pneumatic or mechanical means or a combination of two or all three means are provided to actuate and adjust the supporting and operating element (15) into the RIGID, LOOSE, TENSIONED and PUSHING OUT states.

6. Single-track vehicle with a stabilising device according to one of Claims 1 to 5.

## Revendications

1. Dispositif pour stabiliser un véhicule à voie unique, comportant un dispositif de support (4) et un dispositif de réglage (14) destiné à abaisser et lever au choix des éléments de support, lequel peut être actionné au moyen d'un appareil de commande (10), qui peut être influencé en fonction de signaux de commande d'un indicateur de vitesse détectant la vitesse du véhicule et d'un indicateur d'accélération transversale, moyennant quoi le dispositif de réglage (14) contient au moins un élément d'actionnement et de support (15) pouvant être influencé de manière combinée par l'appareil de commande (10) et/ou par des signaux du conducteur, afin de déployer et de rétracter le dispositif de support (4) et pouvant être bloqué contre celui-ci ainsi que des moyens pour, au choix, bloquer, débloquer, tendre et déployer l'élément d'actionnement et de support (15), **caractérisé en ce que**
l'élément d'actionnement et de support (15) contient un ressort à gaz hydraulique (21) fermé par rapport à l'extérieur, lequel comprend un espace de gaz (24) faisant office de dispositif d'équilibrage de volume et d'accumulation d'énergie, un espace de liquide hydraulique (28) séparé de celui-ci et un piston (25) introduit dans celui-ci, provoquant une translation de refoulement hydraulique, moyennant quoi le piston (25) est pourvu d'une soupape unique d'écoulement autour ou à travers (26) pour le liquide hydraulique, laquelle peut être ouverte ou fermée en fonction du signal de commande et/ou du signal du conducteur respectif,
et **en ce que** les moyens pour, au choix, bloquer, débloquer, tendre et déployer l'élément d'actionnement et de support (15) comprennent une pompe hydraulique unique, qui est destinée à brasser par pompage le liquide hydraulique d'un côté du piston (25) vers l'autre côté du piston (25), respectivement inversement.

2. Dispositif selon la revendication 1, comportant deux axes de support (6 et 7) pouvant être basculés latéralement vers l'extérieur et vers l'intérieur pour chaque rouleau de support (5), **caractérisé en ce que** les axes de support (6 et 7) sont couplés de manière à être réglables de manière synchrone l'un par rapport à l'autre et l'élément d'actionnement et de support (15) est couplé à un de ces axes de support (6, respectivement 7).

3. Dispositif selon la revendication 1, comportant deux axes de support (6 et 7) pouvant être basculés latéralement vers l'extérieur et vers l'intérieur pour chaque rouleau de support (5), **caractérisé en ce que** chacun de ces axes de support (6, respectivement 7) est couplé à un élément d'actionnement et de support (15) propre.

4. Dispositif selon une des revendications précédentes, **caractérisé en ce que** les moyens pour, au choix, bloquer, débloquer, tendre et déployer l'élément d'actionnement et de support (15) comprennent une soupape de commande (30) pour commander un flux du liquide hydraulique d'un côté du piston (25) vers l'autre côté du piston (25), respectivement inversement.

5. Dispositif selon une des revendications précédentes, **caractérisé en ce que**, pour commander et pour régler l'élément d'actionnement et de support (15) dans les états RIGIDE, SOUPLE, TENDU et DÉPLOYÉ, des moyens électriques, pneumatiques ou mécaniques ou une combinaison de deux ou de tous les trois moyens sont prévus.

6. Véhicule à voie unique comportant un dispositif de stabilisation selon une des revendications 1 à 5.
